(19) Europäisches Patentamt
European Patent Office
Office européen des brevets

(11) **EP 2 998 377 A1**

(12) **DEMANDE DE BREVET EUROPEEN**

(43) Date de publication:
**23.03.2016 Bulletin 2016/12**

(51) Int Cl.:
*C09K 5/04* (2006.01)  *F25B 17/08* (2006.01)

(21) Numéro de dépôt: **15185194.6**

(22) Date de dépôt: **15.09.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **18.09.2014  EP 14290281**
**20.11.2014  FR 1461273**

(71) Demandeur: **MOF Application Services**
**92300 Levallois-Perret (FR)**

(72) Inventeurs:
• **AGUADO, Sonia Sierra**
**28803 Alcala de Henares (ES)**
• **WISKEMANN, Bernd**
**1273 Arzier (CH)**

(74) Mandataire: **Novagraaf Technologies**
**Bâtiment O2**
**2, rue Sarah Bernhardt**
**CS90017**
**92665 Asnières-sur-Seine Cedex (FR)**

(54) **UTILISATIONS DE MOF DANS UN SYSTEME DE REFROIDISSEMENT/CHAUFFAGE PAR ADSORPTION**

(57) La présente invention se rapporte à un procédé ou système tritherme de refroidissement/chauffage à adsorption pour machine à froid, à base de MOF comme adsorbant solide, dans certaines gammes de fonctionnement spécifiques, selon le MOF utilisé.

L'invention se rapporte également à des systèmes de climatisation à ventilo-convecteur ou à plancher ou plafond rafraîchissant, ainsi qu'à des systèmes de déshumidification, mettant en oeuvre le procédé ou comprenant le système selon la présente invention.

FIGURE 5

EP 2 998 377 A1

**Description**

**Domaine de l'invention**

La présente invention se rapporte à un procédé ou système tritherme de refroidissement/chauffage à adsorption pour machine à froid, à base de MOF comme adsorbant solide, dans certaines gammes de fonctionnement spécifiques, selon le MOF utilisé.

L'invention se rapporte également à des systèmes de climatisation à ventilo-convecteur ou à plancher ou plafond rafraîchissant, ainsi qu'à des systèmes de déshumidification, mettant en oeuvre le procédé ou comprenant le système selon la présente invention.

**Etat de la technique**

On connait les principes de fonctionnement des machines à froid utilisant des adsorbats solides dans un système tritherme (fermé). Par exemple, les sociétés Vaillant, Viesman, Sortech, Mycon commercialisent de tels type machines à froid.

Si l'on considère un système tritherme à adsorption, avec $T_0$ la température interne d'évaporation à laquelle le froid $Q_0$ est produit, $T_c$ la température intermédiaire de rejet thermique de $Q_c$ (condensation et adsorption) et, enfin $T_A$ la température interne de la source chaude qui fournit $Q_g$ pour la régénération de l'adsorbant.

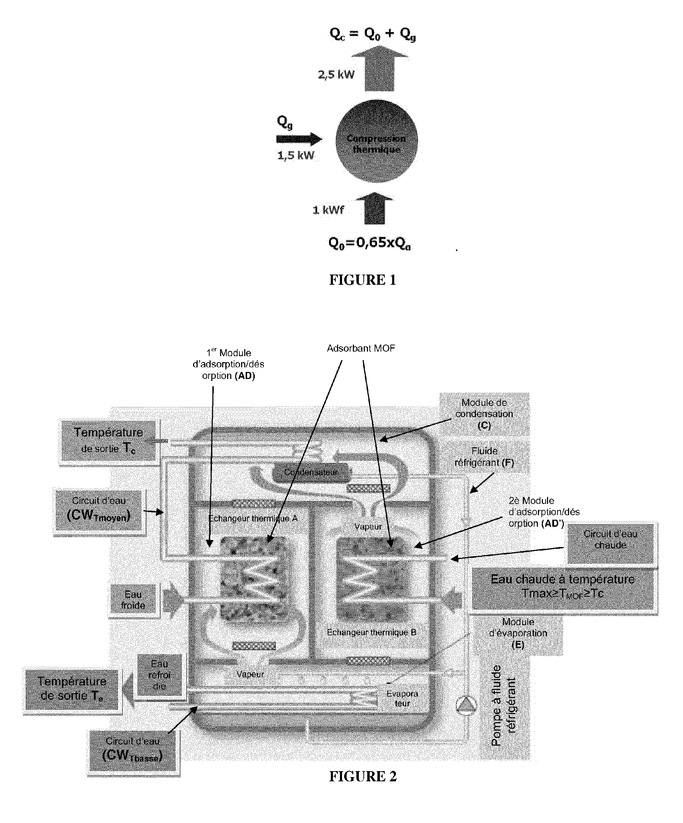

L'efficacité du procédé est déterminée par la quantité de vapeur du fluide réfrigérant qui peut être réversiblement échangée entre adsorption et désorption (coefficient de performance ; « COP » ou «coefficient of performance » en anglais) et par le temps d'adsorption (puissance de refroidissement spécifique : « SCP » ou « specific cooling power » en anglais). Cf. Figure 1.

Ainsi, l'efficacité du procédé de transformation thermique est exprimée :

(i) Par le coefficient de performance (COP)

$$\mathrm{COP} = Q_0/Q_g = Q_{\mathrm{Evaporation}}/Q_{\mathrm{Désorption}}$$

Le COP est directement lié à la variation de masse de fluide cyclée (adsorbée-désorbée) dans le cycle tritherme. En général, les fluides qui offrent les meilleurs potentiels sont ceux qui ont de grandes chaleurs latentes/ chaleurs de vaporisation comme les alcools courts (méthanol, éthanol) et en particulier l'eau.

(i) Par la puissance de la machine qui est exprimée en terme de puissance de refroidissement spécifique (SCP) par volume (V) ou poids (m) du dispositif (dispositif = adsorbant + adsorbeur)

$$\mathrm{SCP} = 1/V \ \mathbf{x} \ Q_0/t$$

ou

$$\mathrm{SCP} = \frac{1}{V/m} \ \frac{Q_{\mathrm{Evaporation}}}{t}$$

Le SCP est directement lié à la vitesse des phénomènes de transferts, c.à.d. le transfert de matière (temps nécessaire pour que le phénomène se réalise, dont la vitesse de transport du fluide dans l'adsorbant est un élément) et le transfert thermique (temps nécessaire au transfert des quantités de chaleur d'un élément à un autre, dont la vitesse de conduction/convection de la chaleur est un élément).

La performance (SCP) d'une machine à froid peut-être limitée soit par:

- 1) la faible quantité de fluide réfrigérant cyclée dans un cycle (p. ex: sur gel de silice (« silica gel » en anglais) comme adsorbant) = le COP

- 2) la faible vitesse d'adsorption/désorption du fluide réfrigérant dans l'adsorbant (ex: gel de silice (« silica gel » en anglais)) - transport de matière

- 3) la faible vitesse de transfert thermique = conduction de chaleur de l'adsorbant et l'adsorbeur et de son interface.

Pour minimiser les charges thermiques ou la taille des dispositifs pour machine à froid, des adsorbants à capacité d'adsorption élevée dans les conditions d'opération, ainsi que des cinétiques d'adsorption et de désorption rapides, sont nécessaires. Ainsi, l'adsorbant et la configuration de l'adsorbeur ont un impact important sur la performance.

L'adsorbant couramment utilisé est le gel de silice (« silica gel » en anglais). C'est un adsorbant peu performant, c.à.d. à faible COP. L'inconvénient du gel de silice en termes d'efficacité du processus est sa capacité d'adsorption relativement faible au cours des cycles adsorption/désorption qui nécessite de grandes quantités de gel de silice. Cela conduit à des appareils volumineux avec des valeurs de puissance (SCP) et d'efficacité (COP) relativement faibles. (J. Bauer et al. Int. J. Energy Res. 2009; 33:1233-1249 [1]).

L'application de MOFs (matériau métallo-organique, ou « Metal Organic Framework » en anglais), qui sont des polymères de coordinations poreux, notamment la Basolite A520, dans des machines à froids a été mentionnée dans EP2230288 [2] et EP2049549 [19].

Toutefois, les MOFs ne sont pas équivalents dans toutes les applications envisageables pour les systèmes de refroidissement/chauffage par adsorption. En particulier, certains MOFs ne sont pas totalement adaptés à certains types de refroidissement/chauffage (p.ex. des systèmes de climatisation), en fonction de leur caractérisation d'adsorption (profil d'isotherme selon classification IUPAC), des températures et pressions de vapeur partielles de fonctionnement.

Il existe donc un besoin de développer des procédés et systèmes tritherme de refroidissement/chauffage à adsorption pour machine à froid, qui sont parfaitement optimisés, c'est-à-dire qui permettent l'optimisation des trois critères suivants :

- 1) quantité de fluide réfrigérant cyclée dans un cycle (COP)

- 2) vitesse d'adsorption/désorption du fluide réfrigérant dans l'adsorbant

- 3) vitesse de transfert thermique = conduction de chaleur entre l'adsorbant et l'adsorbeur.

**Description de l'invention**

La présente invention répond précisément à ce besoin en sélectionnant certains MOFs particulier, pour association avec des modes de fonctionnement particuliers de procédés et systèmes tritherme de refroidissement/chauffage à adsorption, permettant ainsi un fonctionnement optimisé de ces procédés/systèmes.

A. Système fermé selon l'invention - description générale

Selon un aspect, la présente invention se rapporte à un procédé ou système fermé tritherme de refroidissement/chauffage à adsorption pour machine à froid comprenant :

a. un fluide réfrigérant (F) choisi parmi l'eau, les alcools et les hydrocarbures;

b. un module de condensation (C) dudit fluide réfrigérant (F), en connexion thermique avec un circuit d'eau (CW$_{Tmoyen}$) dont la température de l'eau en sortie du circuit est T$_c$;

c. un module d'évaporation (E) dudit fluide réfrigérant (F), en connexion thermique avec un circuit d'eau (CW$_{Tbasse}$) dont la température de l'eau en sortie du circuit est T$_e$ ;

d. au moins un module d'adsorption/désorption (AD) contenant un adsorbant solide (A) constitué d'un matériau métallo-organique métallo-organique hybride poreux (MOF), le module d'adsorption/désorption (AD) étant alternativement en connexion fluide avec ledit module de condensation (C) puis ledit module d'évaporation (E), lequel matériau MOF peut adsorber ou désorber le fluide réfrigérant (F) selon que le module d'adsorption/désorption (AD) est en connexion fluide avec le module d'évaporation (E) et de condensation (C), respectivement, et selon la température T$_{MOF}$ à laquelle le matériau MOF est soumis.

Avantageusement, le système est mis en oeuvre de sorte que le module AD est mis alternativement en mode adsorption puis désorption.

Avantageusement, le système contient deux modules d'adsorption/désorption (AD) et (AD'), chacun alternativement en connexion fluide avec les modules de condensation (C) et d'évaporation (E), de sorte que lorsque (AD) est en connexion fluide avec le module de condensation (C) alors (AD') est en connexion fluide avec le module d'évaporation (E), et inversement. Un exemple de configuration d'un tel système est représenté en Figure 2.

Avantageusement, le fluide réfrigérant (F) peut être de l'eau, un alcool ou un hydrocarbure ; de préférence de l'eau ou un alcool. L'alcool peut être le méthanol ou l'éthanol. Avantageusement, le fluide réfrigérant (F) peut être de l'eau. Avantageusement, le fluide réfrigérant (F) peut être le méthanol ou l'éthanol.

Le terme « en connexion thermique », tel qu'utilisé dans le présent document, se réfère à un moyen de connexion permettant l'échange de chaleur entre les éléments auxquels il se réfère. Par exemple, il peut s'agir d'un moyen de connexion permettant l'échange de chaleur entre le module de condensation (C) et le circuit d'eau (CW$_{Tmoyen}$) ou bien entre module d'évaporation (E) et le circuit d'eau (CW$_{Tbasse}$). Par exemple, la connexion thermique peut être réalisée par l'intermédiaire d'un échangeur thermique. Alternativement, la connexion thermique peut être réalisée par passage du circuit d'eau dans le module de condensation (C) ou le module d'évaporation (E), permettant ainsi le transfert de la chaleur dégagée dans le module de condensation (C) dans le circuit d'eau le traversant, ou inversement permettant le transfert de la chaleur adsorbée dans le module d'évaporation (E) dans le circuit d'eau le traversant.

Le terme « en connexion fluide », tel qu'utilisé dans le présent document, se réfère à un moyen de connexion permettant le transfert de vapeur de fluide réfrigérant entre les éléments auxquels il se réfère. Par exemple, il peut s'agir d'un moyen de connexion permettant le transfert de vapeur de fluide réfrigérant d'un module d'adsorption/désorption (AD') vers le module de condensation (C). Il peut également s'agir d'un moyen de connexion permettant le transfert de vapeur de fluide réfrigérant du module d'évaporation vers un module d'adsorption/désorption (AD) comme illustré sur la Figure 2. Avantageusement, cette connexion fluide peut être contrôlée par une valve, qui peut être soit en position fermée (pas de transfert de vapeur de fluide réfrigérant d'un module à un autre), ou en position ouverte. On dira qu'un module est en connexion fluide avec un autre lorsque la valve les connectant est ouverte. Avantageusement, lorsque le système dispose de deux modules (AD) et (AD'), les deux modules d'adsorption/désorption contiennent le même adsorbant solide MOF, et ne sont pas en connexion fluide avec le module de condensation (C) ou le module d'évaporation (E) simultanément.

Avantageusement, en mode désorption, l'adsorbant MOF est soumis à une température T$_{MOF}$ telle que Tmax$\geq$ T$_{MOF}\geq$ T$_c$, dans lequel Tc représente la température de l'eau en sortie du circuit d'eau (CW$_{Tmoyen}$), et Tmax représente la fourchette haute de la température à laquelle le MOF est régénéré (cad qu'il désorbe les molécules de fluide réfrigérant). Bien entendu, Tmax sera inférieure à la température à laquelle le MOF est susceptible de se décomposer ou de se dégrader. La valeur de Tmax dépend du MOF utilisé. Typiquement, une température Tmax d'au moins 85°C permettra de régénéré les MOFs susceptibles d'être utilisés dans le cadre de la présente invention. Avantageusement, Tmax peut être comprise entre 60°C et 120°C, avantageusement entre 60°C et 100°C, plus avantageusement entre 70°C et 90°C. Un avantage des MOFs par rapport aux adsorbants classiquement utilisés est qu'ils peuvent être régénérés à des températures plus basses.

Avantageusement, lorsque le module d'adsorption/désorption (AD) ou (AD') est en mode désorption, la source de chaleur permettant le chauffage du matériau MOF à la température T$_{max}\geq$: TM$_{OF}$ > T$_c$ est choisie parmi les panneaux solaires, les brûleurs atmosphériques tels que les chaudières à gaz naturel, la géothermie, les chaleurs fatales.

Avantageusement, la connexion thermique entre le fluide réfrigérant (F) et les circuits d'eau (CW$_{Tmoyen}$) et (CW$_{Tbasse}$) des modules de condensation et d'évaporation, respectivement, est assurée par un échangeur thermique (ET).

Dans ce qui suit, les éléments décrits ci-dessus dans la partie « description générale » (F, C, CW$_{Tmoyen}$, Tc, CW$_{Tbasse}$, AD, A, E, AD', etc.) sont repris dans les modes de réalisation 1 à 3 qui suivent, en ajoutant un indice (p.ex. F$_1$) pour désigner le mode de réalisation concerné.

Mode de réalisation 1 :

Pour toutes les variantes décrites dans la partie A ci-dessus pour le système fermé (description générale), l'adsorbant solide (A1) peut être constitué d'un matériau métallo-organique hybride poreux (MOF) choisi parmi les fumarates de zirconium, tels que le MOF-801, et les aminotéréphthalates d'aluminium, tels que Al-CAU-10, et les paramètres de fonctionnement adsorption/désorption peuvent être les suivants :

en mode adsorption :

- le module d'adsorption/désorption (AD1) est en connexion fluide avec le module d'évaporation (E1) ;
- le matériau MOF est soumis à une température T$_{MOF}$ = T$_{c1}$ ; dans lequel T$_{c1}$ représente 455°C $\pm$ 4°C ou 50°C $\pm$ 5°C, pour utilisation du système comme ventilo-convecteur ou surface rafraîchissante, respectivement ;
- $0,0 < p_e/p_{sat(e)} < 0,2$ ; de préférence $P_e/P_{sat(e)} = 0,1$ ; et
- T$_{e1}$ représente 5°C $\pm$ 2°C ou 122°C $\pm$ 3°C, pour utilisation du système comme ventilo-convecteur ou surface rafraîchissante, respectivement ;

dans lequel :

$p_e/p_{sat(e)}$ représente la valeur de pression de vapeur partielle du fluide réfrigérant (ou valeur d'humidité relative lorsque le fluide réfrigérant est l'eau) dans le module d'évaporation (E1) ;

$p_e$ représente la pression du fluide réfrigérant (F1) en phase gazeuse dans le module d'évaporation (E1) ; et

$p_{sat(e)}$ représente la pression de vapeur saturante du fluide réfrigérant (F1) à la température d'adsorption de celui-ci par le matériau métallo-organique hybride poreux ;

en mode désorption :

- le module d'adsorption/désorption (AD1) est en connexion fluide avec le module de condensation (C1) ;
- le matériau MOF est soumis à une température $T_{MOF}$, telle que $T_{max} \geq T_{MOF} > T_{c1}$ ; dans lequel $T_{c1}$ est tel que définie ci-dessus et $T_{max}$ est compris entre 60-100°C ;
- $0,0 < p_c/p_{sat(c)} \leq 0,1$ ; et
- $T_{c1}$ représente 455°C $\pm$ 4°C ou 50°C $\pm$ 5°C , pour utilisation du système comme ventilo-convecteur ou surface rafraîchissante, respectivement ;

dans lequel :

$p_c/p_{sat(c)}$ représente la valeur de pression de vapeur partielle du fluide réfrigérant (ou valeur d'humidité relative lorsque le fluide réfrigérant est l'eau) dans le module de condensation (C1);

$p_c$ représente la pression du fluide réfrigérant (F1) en phase gazeuse dans le module de condensation (C1); et

$p_{sat(c)}$ représente la pression de vapeur saturante du fluide réfrigérant (F1) à la température de désorption de celui-ci du matériau métallo-organique hybride poreux.

Avantageusement, $T_{e1}$ représente 5°C $\pm$ 2°C en mode adsorption, et $T_{c1}$ représente 45°C $\pm$ 4°C en mode désorption. Dans ce mode de fonctionnement, le procédé ou système peut convenir à un système de climatisation à ventilo-convecteur. Ainsi, l'invention fournit également un système de climatisation à ventilo-convecteur mettant en oeuvre ce mode de fonctionnement.

Avantageusement, $T_{e1}$ représente 122°C $\pm$ 3°C en mode adsorption, et $T_{c1}$ représente 50°C $\pm$ 5°C en mode désorption. Dans ce mode de fonctionnement, le procédé ou système peut convenir à un système de climatisation à plancher ou plafond rafraîchissant. Ainsi, l'invention fournit également un système de climatisation à plancher ou plafond rafraîchissant mettant en oeuvre ce mode de fonctionnement.

Mode de réalisation 2 :

Pour toutes les variantes décrites dans la partie A ci-dessus pour le système fermé (description générale), l'adsorbant solide (A2) peut être constitué d'un matériau métallo-organique hybride poreux (MOF) choisi parmi les aminotéréphthalates d'aluminium, tels que Al-CAU-10, et les paramètres de fonctionnement adsorption/désorption peuvent être les suivants :

en mode adsorption :

- le module d'adsorption/désorption (AD2) est en connexion fluide avec le module d'évaporation (E2) ;
- le matériau MOF est soumis à une température $T_{MOF} = T_{c2}$ ; dans lequel $T_{c2}$ représente 35°C $\pm$ 4°C ou 455°C $\pm$ 4°C, pour utilisation du système comme ventilo-convecteur ou surface rafraîchissante, respectivement ;
- $0,05 \leq p_e/p_{sat(e)} \leq 0,25$ ; de préférence $p_e/p_{sat(e)}=0,15$ ; et
- $T_{e2}$ représente 5°C $\pm$ 2°C ou 122°C $\pm$ 3°C, pour utilisation du système comme ventilo-convecteur ou surface rafraîchissante, respectivement ;

dans lequel :

$p_e/p_{sat(e)}$ représente la valeur de pression de vapeur partielle du fluide réfrigérant (ou valeur d'humidité relative lorsque le fluide réfrigérant est l'eau) dans le module d'évaporation (E2) ;

$p_e$ représente la pression du fluide réfrigérant (F2) en phase gazeuse dans le module d'évaporation (E2) ;

$p_{sat(e)}$ représente la pression de vapeur saturante du fluide réfrigérant (F2) à la température d'adsorption de celui-ci par le matériau métallo-organique hybride poreux ;

en mode <u>désorption</u> :

- le module d'adsorption/désorption (AD2) est en connexion fluide avec le module de condensation (C2) ;
- le matériau MOF est soumis à une température $T_{MOF}$, telle que $T_{max} \geq T_{MOF} > T_{c2}$ ; dans lequel $T_{c2}$ est tel que défini ci-dessus et $T_{max}$ est compris entre 60-100°C ;
- $0,05 \leq p_c/p_{sat(c)} \leq 0,15$ ; et
- $T_{c2}$ représente 35°C $\pm$ 4°C ou 455°C $\pm$ 4°C , pour utilisation du système comme ventilo-convecteur ou surface rafraîchissante, respectivement ;

dans lequel :

$p_c/p_{sat(c)}$ représente la valeur de pression de vapeur partielle du fluide réfrigérant (ou valeur d'humidité relative lorsque le fluide réfrigérant est l'eau) dans le module de condensation (C2);
$p_c$ représente la pression du fluide réfrigérant (F2) en phase gazeuse dans le module de condensation (C2);
$p_{sat(c)}$ représente la pression de vapeur saturante du fluide réfrigérant (F2) à la température de désorption de celui-ci du matériau métallo-organique hybride poreux.

Avantageusement, $T_{e2}$ représente 5°C $\pm$ 2°C en mode adsorption, et $T_{c2}$ représente 35°C $\pm$ 4°C en mode désorption. Dans ce mode de fonctionnement, le procédé ou système peut convenir à un système de climatisation à ventilo-convecteur. Ainsi, l'invention fournit également un système de climatisation à ventilo-convecteur mettant en oeuvre ce mode de fonctionnement.

Avantageusement, $T_{e2}$ représente 122°C $\pm$ 3°C en mode adsorption, et $T_{c2}$ représente 455°C $\pm$ 5°C en mode désorption. Dans ce mode de fonctionnement, le procédé ou système peut convenir à un système de climatisation à plancher ou plafond rafraîchissant. Ainsi, l'invention fournit également un système de climatisation à plancher ou plafond rafraîchissant mettant en oeuvre ce mode de fonctionnement.

<u>Mode de réalisation 3 :</u>

Pour toutes les variantes décrites dans la partie A ci-dessus pour le système fermé (description générale), l'adsorbant solide (A3) peut être constitué d'un matériau métallo-organique hybride poreux (MOF) choisi parmi les aminotéréphthalates de zirconium, tels que Zr-UiO-66-NH2, les méthanetétrabenzoates de zirconium, tels que Zr-UiO-MTB (MOF-814), et les fumarates d'aluminium, tels que Basolite A520, et les paramètres de fonctionnement adsorption/désorption peuvent être les suivants :

en mode <u>adsorption</u> :

- le module d'adsorption/désorption (AD3) est en connexion fluide avec le module d'évaporation (E3) ;
- le matériau MOF est soumis à une température $T_{MOF} = T_{c3}$ dans lequel $T_{c3}$ représente 252°C $\pm$ 4°C ou 30°C $\pm$ 4°C pour utilisation du système comme ventilo-convecteur, ou 35°C $\pm$ 4°C ou 40°C $\pm$ 4°C, pour utilisation du système comme surface rafraîchissante;
- $0,10 \leq p_e/p_{sat(e)} < 0,35$ ; de préférence $p_e/p_{sat(e)}$=0,20 ou 0,25 ; et
- $T_{e3}$ représente 5°C $\pm$ 2°C ou 122°C $\pm$ 3°C, pour utilisation du système comme ventilo-convecteur ou surface rafraîchissante, respectivement ;

dans lequel :

$p_e/p_{sat(e)}$ représente la valeur de pression de vapeur partielle du fluide réfrigérant (ou valeur d'humidité relative lorsque le fluide réfrigérant est l'eau) dans le module d'évaporation (E3) ;
$p_e$ représente la pression du fluide réfrigérant (F3) en phase gazeuse dans le module d'évaporation (E3) ;
$p_{sat(e)}$ représente la pression de vapeur saturante du fluide réfrigérant (F3) à la température d'adsorption de celui-ci par le matériau métallo-organique hybride poreux ;

en mode <u>désorption</u> :

- le module d'adsorption/désorption (AD3) est en connexion fluide avec le module de condensation (C3) ;
- le matériau MOF est soumis à une température $T_{MOF}$, telle que $T_{max} \geq T_{MOF} > T_{c3}$ ; dans lequel $T_{c3}$ est tel que défini ci-dessus et $T_{max}$ est compris entre 60-100°C ;
- $0,10 \leq p_c/p_{sat(c)} \leq 0,20$ ou $0,15 \leq p_c/p_{sat(c)} \leq 0,25$ ; et

- $T_{c3}$ représente 252°C $\pm$ 4°C, 30°C $\pm$ 4°C, 35°C $\pm$ 4°C ou 40°C $\pm$ 4°C, pour utilisation du système comme ventilo-convecteur ou surface rafraîchissante, respectivement ;

dans lequel :

$p_c/p_{sat(c)}$ représente la valeur de pression de vapeur partielle du fluide réfrigérant (ou valeur d'humidité relative lorsque le fluide réfrigérant est l'eau) dans le module de condensation (C3);
$p_c$ représente la pression du fluide réfrigérant (F3) en phase gazeuse dans le module de condensation (C3);
$p_{sat(c)}$ représente la pression de vapeur saturante du fluide réfrigérant (F3) à la température de désorption de celui-ci du matériau métallo-organique hybride poreux.

*Mode de réalisation 3a :*

Avantageusement, l'adsorbant solide (A3) peut être constitué d'un matériau métallo-organique hybride poreux (MOF) choisi parmi les aminotéréphthalates de zirconium, tels que Zr-UiO-66-NH2, et les paramètres de fonctionnement adsorption/désorption sont les suivants :

en mode adsorption :

- le matériau MOF est soumis à une température $T_{MOF} = T_{c3}$ dans lequel $T_{c3}$ représente 30°C $\pm$ 4°C ou 40°C $\pm$ 4°C, pour utilisation du système comme ventilo-convecteur ou surface rafraîchissante, respectivement ;
- $0,10 \leq p_e/p_{sat(e)} < 0,30$ ; de préférence $p_e/p_{sat(e)}=0,20$ ; et
- $T_{e3}$ représente 5°C $\pm$ 2°C ou 122°C $\pm$ 3°C, pour utilisation du système comme ventilo-convecteur ou surface rafraîchissante, respectivement ;

en mode désorption :

- le matériau MOF est soumis à une température $T_{MOF}$, telle que $T_{max} \geq T_{MOF} > T_{c3}$ ; dans lequel $T_{c3}$ est tel que définie ci-dessus et $T_{max}$ est compris entre 60-100°C ;
- $0,10 \leq p_c/p_{sat(c)} \leq 0,20$ ; et
- $T_{c3}$ représente 30°C $\pm$ 4°C ou 40°C $\pm$ 4°C, pour utilisation du système comme ventilo-convecteur ou surface rafraîchissante, respectivement.

Avantageusement, $T_{e3}$ représente 5°C $\pm$ 2°C en mode adsorption, et $T_{c3}$ représente 30°C $\pm$ 4°C en mode désorption. Dans ce mode de fonctionnement, le procédé ou système peut convenir à un système de climatisation à ventilo-convecteur. Ainsi, l'invention fournit également un système de climatisation à ventilo-convecteur mettant en oeuvre ce mode de fonctionnement.
Avantageusement, $T_{e3}$ représente 122°C $\pm$ 3°C en mode adsorption, et $T_{c3}$ représente 40°C $\pm$ 4°C en mode désorption. Dans ce mode de fonctionnement, le procédé ou système peut convenir à un système de climatisation à plancher ou plafond rafraîchissant. Ainsi, l'invention fournit également un système de climatisation à plancher ou plafond rafraîchissant mettant en oeuvre ce mode de fonctionnement.

*Mode de réalisation 3b :*

Avantageusement, l'adsorbant solide (A3) peut être constitué d'un matériau métallo-organique hybride poreux (MOF) choisi parmi les aminotéréphthalates de zirconium, tels que Zr-UiO-66-NH2, les méthanetétrabenzoates de zirconium, tels que Zr-UiO-MTB (MOF-814), et les fumarates d'aluminium, tels que Basolite A520, et les paramètres de fonctionnement adsorption/désorption sont les suivants :

en mode adsorption :

- le matériau MOF est soumis à une température $T_{MOF} = T_{c3}$ dans lequel $T_{c3}$ représente 252°C $\pm$ 4°C ou 35°C $\pm$ 4°C, pour utilisation du système comme ventilo-convecteur ou surface rafraîchissante, respectivement ;
- $0,15 \leq p_e/p_{sat(e)} \leq 0,35$ ; de préférence $p_e/p_{sat(e)}=0,25$ ; et
- $T_{e3}$ représente 5°C $\pm$ 2°C ou 122°C $\pm$ 3°C, pour utilisation du système comme ventilo-convecteur ou surface rafraîchissante, respectivement ;

en mode désorption :

- le matériau MOF est soumis à une température $T_{MOF}$, telle que $T_{max} \geq T_{MOF} > T_{c3}$ ; dans lequel $T_{c3}$ est tel que définie ci-dessus et $T_{max}$ est compris entre 60-100°C ;
- $0,15 \leq p_c/p_{sat(c)} \leq 0,25$ ; et
- $T_{c3}$ représente 252°C $\pm$ 4°C ou 35°C $\pm$ 4°C, pour utilisation du système comme ventilo-convecteur ou surface rafraîchissante, respectivement.

Avantageusement, $T_{e3}$ représente 5°C $\pm$ 2°C en mode adsorption, et $T_{c3}$ représente 25°C $\pm$ 4°C en mode désorption. Dans ce mode de fonctionnement, le procédé ou système peut convenir à un système de climatisation à ventilo-convecteur. Ainsi, l'invention fournit également un système de climatisation à ventilo-convecteur mettant en oeuvre ce mode de fonctionnement.

Avantageusement, $T_{e3}$ représente 12°C $\pm$ 3°C en mode adsorption, et $T_{c3}$ représente 35°C $\pm$ 4°C en mode désorption. Dans ce mode de fonctionnement, le procédé ou système peut convenir à un système de climatisation à plancher ou plafond rafraîchissant. Ainsi, l'invention fournit également un système de climatisation à plancher ou plafond rafraîchissant mettant en oeuvre ce mode de fonctionnement.

Dans chacun des modes de réalisation 1 à 3, la surface rafraîchissante peut représenter un plancher et ou un plafond rafraîchissant.

Dans chacun des modes de réalisation 1 à 3, l'adsorbant MOF peut être mis en forme selon tout procédé connu dans le domaine des systèmes trithermes de refroidissement/chauffage à adsorption pour machine à froid (p.ex. lit fixe, revêtement adhésif ou composite). Avantageusement, l'adsorbant MOF peut être mis enforme sur un échangeur de chaleur métallique selon un procédé permettant la croissance du MOF directement sur la surface d'un support métallique (i.e., sans liant, adhésif ou composite). Il peut s'agir par exemple d'un procédé de croissance de MOF sur la surface d'un support métallique, comprenant :

(i) oxyder le métal de la surface du support métallique pour la recouvrir d'une couche d'oxyde métallique;

(ii) préparer une solution/suspension précurseur de matériau MOF comprenant le mélange dans un solvant polaire (a) d'un précurseur inorganique métallique se présentant sous la forme de métal M, d'un sel de métal M ou d'un complexe de coordination comprenant l'ion métallique M dans lequel M est un ion métallique choisi parmi $Al^{3+}$, $Fe^{2+}$, $Fe^{3+}$, $Zn^{2+}$, $Ti^{3+}$, $Ti^{4+}$, $Zr^{2+}$, $Zr^{4+}$, $Ca^{2+}$, $Cu^{2+}$, $Gd^{3+}$, $Mg^{2+}$, $Mn^{2+}$, $Mn^{3+}$, $Mn^{4+}$ ou $Si^{4+}$; de préférence $Zr^{4+}$ ou $Al^{3+}$; et (b) d'au moins un ligand L choisi parmi un ligand di-, tri- ou tétra- carboxylate choisi parmi : $C_2H_2(CO_2^-)_2$ (fumarate), $C_2H_4(CO_2^-)_2$ (succinate), $C_3H_6(CO_2^-)_2$ (glutarate), $C_4H_4(CO_2^-)_2$ (muconate), $C_4H_8(CO_2^-)_2$ (adipate), $C_7H_{14}(CO_2^-)_2$ (azelate), $C_5H_3S(CO_2^-)_2$ (2,5-thiophènedicarboxylate), $C_6H_4(CO_2^-)_2$ (téréphtalate), $C_6H_4(CO_2^-)_2$ (iso-téréphtalate), $C_6H_2N_2(CO_2^-)_2$ (2,5-pyrazine dicarboxylate), $C_{10}H_6(CO_2^-)_2$ (naphtalène-2,6-dicarboxylate), $C_{12}H_8(CO_2^-)_2$ (biphényle-4,4'-dicarboxylate), $C_{12}H_8N_2(CO_2^-)_2$ (azobenzènedicarboxylate), $C_6H_3(CO_2^-)_3$ (benzène-1,2,4-tricarboxylate), $C_6H_3(CO_2^-)_3$ (benzène-1,3,5-tricarboxylate), $C_{24}H_{15}(CO_2^-)_3$ (benzène-1,3,5-tribenzoate), $C_6H_2(CO_2^-)_4$ (benzène-1,2,4,5-tétracarboxylate, $C_{10}H_4(CO_2^-)_4$ (naphtalène-2,3,6,7-tétracarboxylate), $C_{10}H_4(CO_2^-)_4$ (naphtalène-1,4,5,8-tétracarboxylate), $C_{12}H_6(CO_2^-)_4$ (biphényl-3,5,3',5'-tétracarboxylate), le 2-aminotéréphtalate, le 2-nitrotéréphtalate, le 2-méthyltéréphtalate, le 2-chlorotéréphtalate, le 2-bromotéréphtalate, le 2,5-dihydroxotéréphtalate, le tétrafluorotéréphtalate, le tétraméthyltéréphtalate, le diméthyl-4,4'-biphénydicarboxylate, le tétraméthyl-4,4'-biphénydicarboxylate, le dicarboxy-4,4'-biphénydicarboxylate, ou le 2,5-pyrazyne dicarboxylate ;

(iii) immerger le support métallique oxydé obtenu à l'étape (i) dans la solution/suspension obtenue à l'étape (ii);

(iv) chauffer le mélange de l'étape (iii) à 100-140°C, de préférence 110-130°C, avantageusement à 120°C pendant 24 à 36 heures, de préférence 48 à 36 heures, avantageusement au moins 48 heures ;

(v) Retirer le support métallique de la solution/suspension précurseur de matériau MOF,

(vi) Rincer le support avec un solvant approprié

(vii) Sécher à l'air à 40-60°C, de préférence 45-55°C, avantageusement à 50°C.

Dans l'étape (ii), le ligand L peut également représenter le 2,5 diperfluorotéréphthalate, azobenzène 4,4'-dicarboxylate, 3,3'-dichloro azobenzène 4,4'-dicarboxylate, 3,3'-dihydroxo azobenzène 4,4'-dicarboxylate, 3,3'-diperfluoro azobenzène 4,4'-dicarboxylate, 3,5,3',5'-azobenzène tétracarboxylate, 2,5-diméthyl téréphthalate, perfluorosuccinate, perfluoromuconate, perfluoro glutarate, 3,5,3',5' perfluoro-4,4'-azobenzène dicarboxylate, 3,3'-diperfluoro azobenzène 4,4'-dicarboxylate.

Avantageusement, le ligand L peut représenter $C_2H_2(CO_2^-)_2$ (fumarate), $C_6H_4(CO_2^-)_2$ (téréphtalate), $C_6H_4(CO_2^-)_2$ (isotéréphtalate), le 2-aminotéréphtalate, le MTB (méthanetétrabenzoate), ou le 1,4-benzènedicarboxylate.

Avantageusement, le support métallique peut être en cuivre ou aluminium, et peut se présenter sous forme de plaque, de structure en nid d'abeille (« honeycomb shape » en anglais), ou toute forme utilisée dans les échangeurs de chaleur, par exemple un tube plat à ailettes.

Avantageusement, l'étape (i) peut être réalisée par tout moyen connu de l'homme du métier, par exemple par un traitement thermique ou chimique de la surface de l'adsorbeur, et qui est spécifique et adapté au matériau de l'adsorbeur et de l'adsorbant. Par exemple, lorsque le support métallique est en cuivre, l'étape (i) peut être réalisée en plaçant le support en cuivre dans un four à une température et pendant un lapse de temps suffisants pour réaliser l'oxydation de la surface du support en cuivre. Par exemple, le traitement au four peut être réalisé à 100°C sous atmosphère ambiante. Dans un autre exemple, lorsque le support métallique est en aluminium, l'étape (i) peut être réalisée en traitant le support dans une solution d'hydroxyde de sodium, dans une solution diluée d'acide nitrique (pour désoxyder la surface d'aluminium), puis séchage à l'air à une température et pendant un lapse de temps suffisants pour réaliser l'oxydation de la surface du support en aluminium. Par exemple, le séchage à l'air peut être réalisé à 60°C.

La préparation de la solution/suspension précurseur de matériaux MOF peut être de préférence réalisée en présence d'énergie qui peut être apportée par exemple par le chauffage, comme par exemple des conditions hydrothermales ou solvothermales, mais également par micro-ondes, par ultrasons, par broyage, par un procédé faisant intervenir un fluide supercritique, etc. Les protocoles correspondants sont ceux connus de l'homme du métier. Des exemples non limitatifs de protocoles utilisables pour les conditions hydrothermales ou solvothermales sont décrits par exemple dans K. Byrapsa, et al. « Handbook of hydrothermal technology », Noyes Publications, Parkridge, New Jersey USA, William Andrew Publishing, LLC, Norwich NY USA, 2001 [14]. Pour la synthèse par voie micro-ondes, des exemples non limitatif de protocoles utilisables sont décrits par exemple dans G. Tompsett, et al. ChemPhysChem. 2006, 7, 296 [15]; dans S.-E. Park, et al. Catal. Survey Asia 2004, 8, 91 [16] ; dans C. S. Cundy, Collect. Czech. Chem. Commum. 1998, 63, 1699 [17]; ou dans S. H. Jhung, et al. Bull. Kor. Chem. Soc. 2005, 26, 880 [18].

Les conditions hydrothermales ou solvothermales, dont les températures de réactions peuvent varier entre 0 et 220°C, sont généralement effectuées dans des récipients en verre (ou en plastique) lorsque la température est inférieure à la température d'ébullition du solvant. Lorsque la température est supérieure ou lorsque la réaction s'effectue en présence de fluor, des corps en téflon insérés dans des bombes métalliques sont employés [14].

Ainsi, avantageusement, l'étape (iv) peut être réalisée dans un corps en téflon inséré dans une bombe métallique (« teflonlined stainless steel autoclave » en anglais).

Les solvants utilisés dans l'étape (ii) sont généralement polaires. Notamment les solvants suivants peuvent être utilisés : l'eau, les alcools, le diméthylformamide, le diméthylsulfoxide, l'acétonitrile, le tétrahydrofurane, le diéthylformamide, le chloroforme, le dichlorométhane, le diméthylacétamide ou des mélanges de ces solvants. Avantageusement, il peut s'agir du diméthylformamide (DMF). Les solvants ci-dessus peuvent également être utilisés dans l'étape de rinçage (vi).

Un ou plusieurs additifs peuvent également être ajoutés au cours de la préparation de la solution/suspension précurseur de matériau MOF, dans l'étape (ii), afin de moduler le pH du mélange. Ces additifs peuvent avantageusement être choisis parmi les acides minéraux ou organiques ou les bases minérales ou organiques. En particulier, l'additif peut être choisi parmi HF, HCl, HNO$_3$, H$_2$SO$_4$, NaOH, KOH, la lutidine, l'éthylamine, la méthylamine, l'ammoniac, l'urée, l'EDTA, la tripropylamine, pyridine, etc. Avantageusement, HCl peut être utilisé.

Le procédé décrit ci-dessus a l'avantage de permettre l'obtention de supports métalliques revêtus d'une couche fine de matériau MOF, sans utilisation de liants, adhésifs ou composite pour assurer l'adhérence du MOF à la surface du support. Le matériau MOF adhère à la couche d'oxyde métallique générée sur la surface du support métallique pendant l'étape (i) du procédé. Dans des applications d'échangeurs de chaleur, où le matériau MOF fonctionne comme adsorbant (e.g., machines à froid), cette mise en forme de MOF en couche directement sur le support métallique permet d'optimiser la vitesse de transfert thermique, et de réduire la masse de couche d'adsorbant (puisque aucun liant, adhésif ou composite n'est nécessaire).

Or on sait que, dans le cas des échangeurs de chaleur à surface revêtue d'adsorbant, bien entendu, la surface d'échange est importante, mais généralement la surface est imposée moins pour assurer la puissance thermique que pour assurer la quantité d'adsorbant nécessaire car l'épaisseur des couches d'adsorbant est limitée. Autrement dit, une réduction de la masse d'adsorbant par un facteur 2 peut se traduire par une réduction des surfaces d'échange d'un facteur proche de 2 et le volume de chaque adsorbeur serait également fortement réduit.

Le procédé ci-dessus a justement l'avantage de permettre de déposer un adsorbant MOF pour former une surface revêtue efficace avec une épaisseur appropriée d'adsorbant.

Un autre avantage de ce procédé est de permettre une optimisation de la masse d'eau cyclée au cours d'un cycle, lorsque qu'un échangeur de chaleur revêtu de MOF selon le procédé de l'invention est utilisé. En effet, typiquement, dans la chaleur de régénération, la chaleur sensible peut représenter le tiers et la chaleur latente les deux tiers. A titre d'exemple, une réduction d'un facteur 2 des masses d'adsorbant et de métal, entrainerait une réduction d'un facteur deux de la chaleur sensible si les conditions de température sont les mêmes. Le gain du COP serait alors entre 15 et 20% ce qui est très appréciable.

En résumé, en utilisant ce procédé, on accède à des échangeurs de chaleur recouverts de MOF avec des performances avantageuses en termes de masse cyclée, COP et SCP. Selon un autre aspect, dans chacun des modes de réalisation 1 à 3, l'invention se rapporte également à une utilisation du procédé ou système selon l'invention telle que décrite ci-dessus dans l'un quelconque des modes de réalisation 1 à 3 pour le refroidissement ou le chauffage dans un système de climatisation à ventilo-convecteur, ou à plancher ou plafond rafraîchissant.

B. Système ouvert selon l'invention

Les systèmes de refroidissement par dessiccation sont des systèmes à cycle ouvert utilisant le réfrigérant en contact direct avec l'air. Le cycle de refroidissement est constitué d'une combinaison de refroidissement par évaporation et de déshumidification de l'air grâce à un matériau dessiccatif. Le terme " ouvert " indique que le réfrigérant ne peut pas être réutilisé après avoir fourni le refroidissement désiré, du réfrigérant neuf doit donc être réinjecté dans le système. Sous ces conditions, le seul réfrigérant pouvant être utilisé est l'eau car il sera en contact avec l'air fourni au bâtiment. Habituellement, cette technologie utilise des roues dessiccatives en rotation comme matériau dessiccatif.

Des appareils et méthodes pour l'échange de chaleur et d'humidité entre deux courants d'air sont connus (voir par exemple EP-0846923-A). De tels appareils et procédés sont utilisés pour l'amélioration de l'air ambiant, par exemple, de petites maisons et des bâtiments, c'est à dire pour refroidir et sécher l'air extérieur qui est introduit dans un bâtiment en été et pour chauffer et humidifier ledit air pendant l'hiver avant que l'air soit transféré dans le bâtiment.

Cependant, il existe un problème lorsque l'air extérieur est chaud et humide, c'est à dire quand la température est supérieure à 35 °C et l'humidité relative extérieure p/psat est supérieure à 0,25, étant donné que les dispositifs connus ne sont pas adaptés pour traiter cet air.

Un design particulier de ces systèmes est requis en cas d'utilisation pour des climats extrêmes comme par exemple pour les régions côtières asiatiques. En effet, de part la grande humidité de l'air ambiant, la configuration standard de ce système ne suffit pas à réduire l'humidité jusqu'à un niveau suffisant pour ensuite utiliser un refroidissement par évaporation directe. Ainsi, il existe d'autres procédés adaptés à un climat spécifique qui sont soit déjà utilisés sur des installations, soit encore au stade du développement. Des adsorbants du type du gel de silice sont le plus souvent utilisés dans les roues dessicantes des cycles ouverts. Les équipementiers ont sélectionné des adsorbants spécifiques pour leurs roues. Globalement, on peut dire que pour les climats tempérés, les roues sont très efficaces et donnent d'excellents résultats. Néanmoins, ce n'est pas le cas pour les climats tropicaux humides où les roues ne sont absolument pas adaptées.

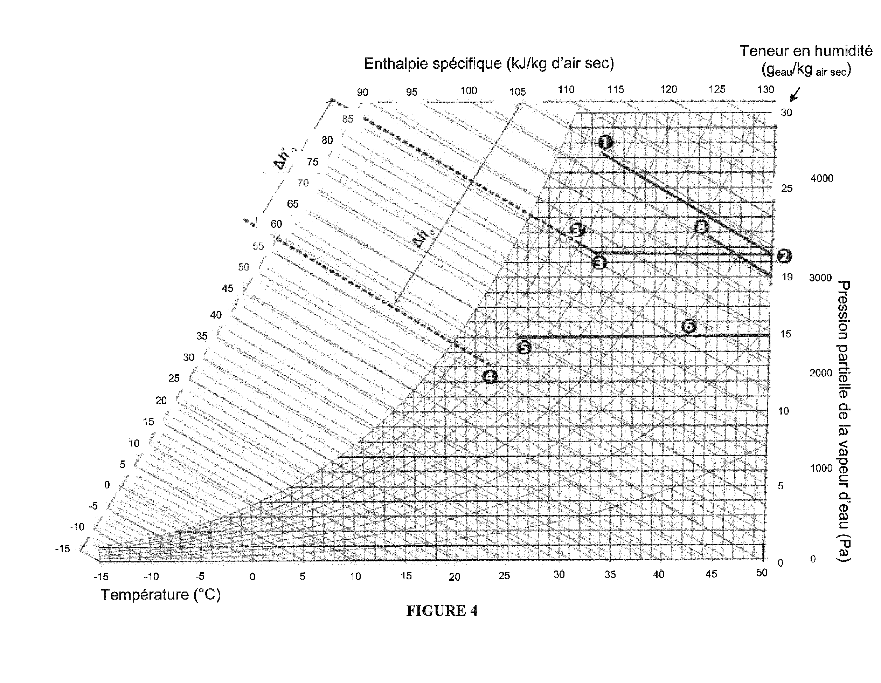

C'est ainsi qu'est présenté sur la Figure 4 un cycle ouvert correspondant à des conditions typiques de climat tropical humide. Considérons de l'air à 34°C et 80% d'humidité relative, point 1 (soit une teneur de 27,5g d'eau par kg d'air sec), situation assez courante en agglomération en zone tropicale humide (Figure 4). Le point 2, en sortie de roue, correspond à une teneur de 20,5g d'eau par kg d'air sec (soit une perte de 7g/kg air sec) et une humidité relative d'environ 27% à 50°C. La déshumidification est donc insuffisante pour permettre de rentrer dans la zone de confort dans la suite des opérations. D'où la nécessité d'avoir recours à un chiller pour refroidir en passant du point 3 au point 4.

La présente invention permet de répondre à ce problème technique en éliminant les problèmes précités et en proposant un procédé et un appareil qui fonctionne efficacement dans les conditions de forte humidité ci-dessus.

Ainsi, selon un autre aspect, la présente invention se rapporte à un procédé de déshumidification à adsorption comprenant l'association d'un système de séchage par roue dessicante avec un solide (A5) constitué d'un matériau métallo-organique hybride poreux (MOF) choisi parmi les carboxylates d'aluminium, tels que Al-MIL-100, les fumarates de zirconium, tels que le MOF-801, ou le MOF-841 (Zr-UiO-MTB), comme adsorbant dessicatif.

L'adsorbant (A5) disposé sur la roue dessicante permet de déshumidifier et refroidir un premier flux d'air amené de l'air ambiant (extérieur) vers l'intérieur d'un bâtiment, et de restituer un deuxième flux d'air chaud et humide depuis l'intérieur dudit bâtiment bers l'air ambiant (extérieur).

En effet, le MOF-801 qui présente une forte capacité d'adsorption jusqu'à 20% d'H.R. (humidité relative) semble prometteur et être adapté pour une telle application. De même le MOF-841 qui présente une capacité d'adsorption très élevée pour une H.R. comprise entre 100 et 25% peut être intéressant.

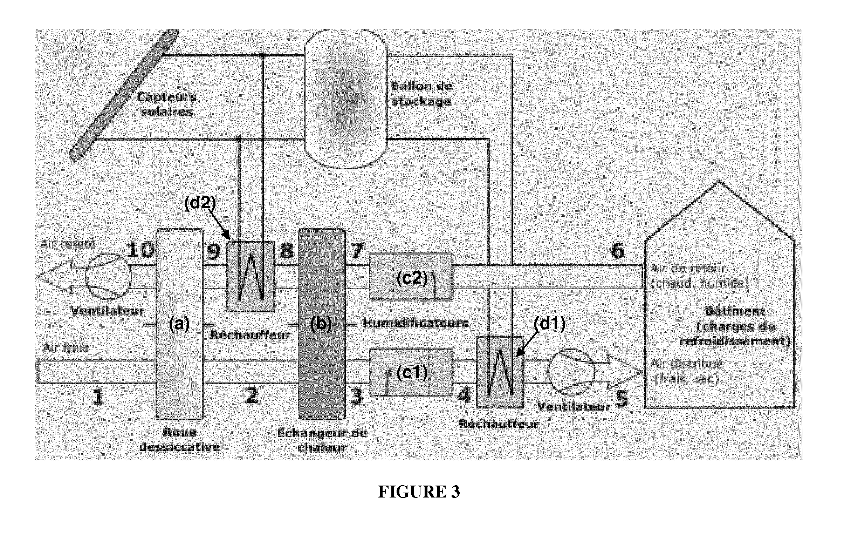

Un exemple de dispositif adapté à la mise en oeuvre de ce procédé de déshumidification est illustré à la Figure 3.

*Principe de fonctionnement, tel au 'illustré à la Figure 3 :*

En été (le réchauffeur 4-5 n'est pas utilisé) En (1) l'air extérieur chaud et humide entre dans le système et traverse la roue dessiccative qui est en rotation lente. En passant à travers cette roue (1-2), l'air est déshumidifié par l'adsorption de l'eau. Ce phénomène implique également une augmentation de la température de l'air du fait de la chaleur d'adsorption. Ensuite l'air passe à travers une autre roue que est en fait un échangeur de chaleur (2-3). L'air est donc refroidit de manière significative. Enfin, l'air passe à travers un humidificateur (3-4) dans lequel son humidité est augmentée jusqu'à sa valeur de consigne, et sa température encore diminuée. On obtient donc en (5) un air frais et sec. En (6) on récupère un air plus chaud et plus humide que l'air distribué. Il va encore être humidifié dans un autre humidificateur (6-7) pour arriver proche de son point de saturation. Ensuite, l'air passe à travers de l'échangeur de chaleur (7-8), ainsi cette roue va être refroidie à mesure que l'air se réchauffe. Ce phénomène a pour effet de " régénérer " les propriétés de la roue échangeur de chaleur. Ensuite, l'air est encore réchauffé grâce à l'énergie solaire via le réchauffeur (8-9). Dans un dernier temps, la roue dessiccative est régénérée (9-10) grâce à l'air chaud. En d'autres termes, au passage de l'air chaud, l'humidité dans la roue diminue à mesure que l'humidité dans l'air chaud augmente.

En hiver le réchauffeur (4-5) est utilisé pour chauffer l'air entrant dans le bâtiment. Pour fonctionner, le système a besoin d'une température venant des capteurs relativement basse (50°C à 75°C) ainsi des capteurs plans sont suffisants, et des capteurs à air peuvent parfois être utilisés. Un ballon de stockage peut également être utilisé pour prolonger l'utilisation du système.

Ainsi, selon un aspect de l'invention, on propose un procédé de climatisation par échange de chaleur et d'humidité entre deux flux d'air, l'un des deux étant chaud et humide, au moins pendant une première partie de l'année, dans lequel un premier flux d'air est amené depuis l'air ambiant jusqu'à l'intérieur d'un bâtiment et un second desdits flux d'air est amené depuis l'intérieur dudit bâtiment vers l'air ambiant, moyennant quoi ledit premier flux d'air est transféré à travers un déshumidificateur (a) puis transféré à travers un échangeur de chaleur (b) avant d'être transféré à l'intérieur dudit bâtiment, tandis que ledit second flux d'air est refroidi puis transféré à travers ledit échangeur de chaleur (b) après quoi il est transféré à travers ledit déshumidificateur (a) **caractérisé en ce que** le premier flux d'air a une humidité relative (HR) $0,15 < HR \leq 0,60$ ; de préférence $0,25 < HR \leq 0,50$, et le déshumidificateur est un déshumidificateur par adsorption comprenant un absorbant solide (A5) constitué d'un matériau métallo-organique hybride poreux (MOF) choisi parmi les carboxylates d'aluminium, tels que Al-MIL-100, les fumarates de zirconium, tels que le MOF-801, ou le MOF-841 (Zr-UiO-MTB).

Selon une autre variante, ledit premier flux d'air est, au moins pendant une seconde partie de l'année, plus froid et moins humide en termes absolus que le deuxième flux d'air.

Avantageusement, le déshumidificateur est une roue dessicante. Par exemple, on peut utiliser une roue dessicante de type Munters.

Avantageusement, le premier flux d'air peut être humidifié par passage dans un humidificateur (c1) après passage dans l'échangeur de chaleur (b). Cette étape permet d'ajuster l'humidité du premier flux d'air à une valeur de consigne avant son transfert dans le bâtiment.

Avantageusement, le premier flux d'air peut être chauffé par passage dans un réchauffeur (d1) après passage dans l'échangeur de chaleur (b), et éventuellement dans l'humidificateur (c1). Cette étape permet d'ajuster la température du premier flux d'air à une valeur de consigne avant son transfert dans le bâtiment. De préférence, le système de chauffage (d1) sera utilisé pendant les mois froids de l'année (p.ex. pendant l'hiver), et ne sera pas utilisé pendant la période estivale.

Avantageusement, le deuxième flux d'air peut être humidifié par passage dans un humidificateur (c2) après passage dans l'échangeur de chaleur (b). Cette étape permet d'ajuster l'humidité du deuxième flux d'air à une valeur proche de son point de saturation avant son transfert vers l'air ambiant (à l'extérieur du bâtiment).. Avantageusement, le deuxième flux d'air peut être chauffé par passage dans un réchauffeur (d2) après passage dans l'échangeur de chaleur (b), et éventuellement dans l'humidificateur (c2). Cette étape permet d'ajuster la température du deuxième flux d'air à une valeur de consigne avant son transfert dans le déshumidificateur. Le flux d'air chaud permet de «régénérer» l'adsorbant du déshumidificateur : au passage de l'air chaud, l'humidité dans le déshumidificateur diminue à mesure que l'humidité dans le deuxième flux d'air rejeté vers l'extérieur augment..

Avantageusement, les systèmes de chauffage (d1) et (d2) peuvent être alimentés par des panneaux solaires. Le système peut être agrémenté d'un ballon de stockage (ballon tampon) contenant de l'eau chaude (cf. Figure 3).

Selon un autre aspect, on propose un système de déshumidification mettant en oeuvre un procédé de climatisation par échange de chaleur et d'humidité entre deux flux d'air selon l'invention. Par exemple, un système tel qu'illustré à la Figure 3 peut être utilisé. Selon un autre aspect, on propose l'utilisation d'un procédé ou système de déshumidification selon l'invention pour la déshumidification de l'air ambiant.

Les matériaux MOF mentionnés dans les différents modes de réalisation décrits dans le contexte de la présente invention sont connus, et leur synthèse et caractérisation ont été rapportées dans la littérature:

1) Zr-UiO-66 : Cavka et al., J. Am. Chem. Soc., 2008, 130, 13850 [7]
2) Zr-UiO-66-NH2 : Kandiah et al J. Mater. Chem., 2010,20, 9848-9851 [9]
3) Zr-fumarate (MOF-801) : réf [6] et Wiβmann et al., Microporous mesoporous mater., 2012, 152, 64 [8]
4) MOF-841 : réf **[6]**
5) Al-CAU-10 : Reinsch et al, Chem. Mater. 2013, 25, 17-26 **[10]**
6) Al-fumarate (Basolite A520) : EP2230288
7) Al-MIL 100 : Volkringer,†Chem. Mater. 2009, 21, 5695-5697 **[11]**

**Brève description des figures**

- La figure 1 schématise le principe de fonctionnement des machines à froid utilisant des adsorbats solides dans un système tritherme (fermé).

- La figure 2 représente un exemple de configuration d'un système fermé tritherme de refroidissement/chauffage à adsorption pour machine à froid, avec deux modules adsorption/désorption fonctionnant en opposition de phase.
- La figure 3 représente un exemple de dispositif de climatisation par échange de chaleur et d'humidité entre deux flux d'air selon l'invention (système ouvert).
- Figure 4 : Représentation, dans un diagramme psychométrique, du cycle ouvert avec appoint d'un GRL (évolution 3-4) en climat tropical humide (le lecteur pourra se référer à « La climatisation solaire », F.M. et D. Mugnier, Dunod pour des enseignements complémentaires)

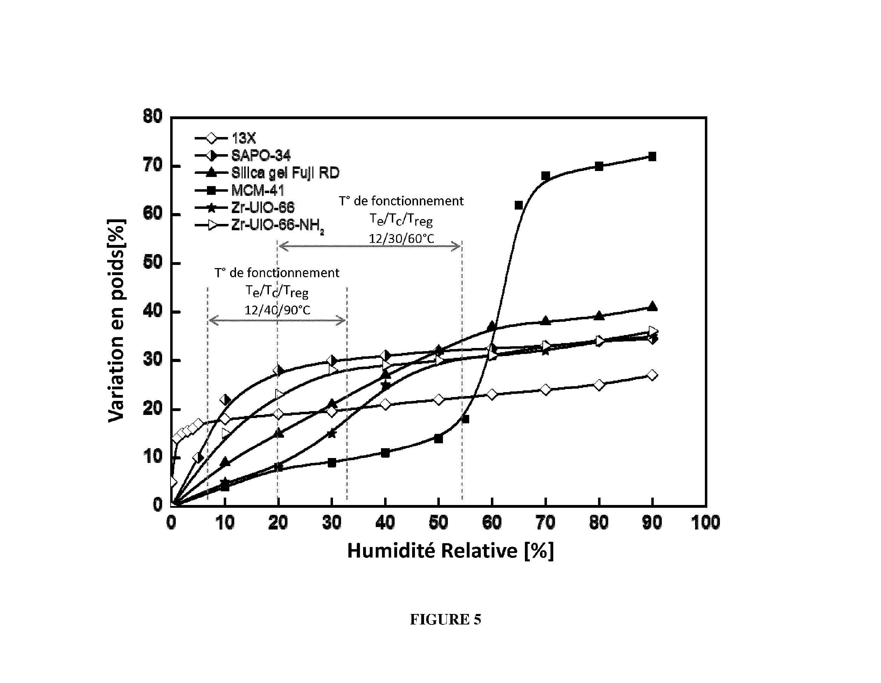

- La figure 5 représente un comparatif des profiles d'adsorption isothermes d'eau des MOFs Zr-UiO-66 et Zr-UiO-66-NH2 avec différents autres adsorbants solides (MCM-41, silica gel Fuji RD, SAPO-34, et 13X). Les deux modes de fonctionnements identifiés (zones en pointillés), correspondent à deux exemples de modes de fonctionnement potentiels pour un système fermé tritherme de refroidissement/chauffage à adsorption équivalent à celui de la figure 2, utilisant le MOF Zr-UiO-66-NH2 et MOF Zr-UiO-66, respectivement. Les deux modes de fonctionnement ont été définis à partir des profiles d'adsorption isothermes d'eau de ces MOFs, notamment en fonction/autour du point d'inflexion de l'isotherme du MOF Zr-UiO-66-NH2 et celui du MOF Zr-UiO-66. « $T_e$ » correspond à la température de l'eau en sortie du circuit d'eau en connexion thermique avec le module d'évaporation (température interne d'évaporation du fluide réfrigérant), « $T_c$ » correspond à la température de l'eau en sortie du circuit d'eau en connexion thermique avec le module de condensation (température intermédiare de rejet thermique), et « $T_{reg}$ » correspond à la température de regénération à laquelle est soumise l'adsorbant en mode désorption (équivalent à « TMOF » sur la figure 2).

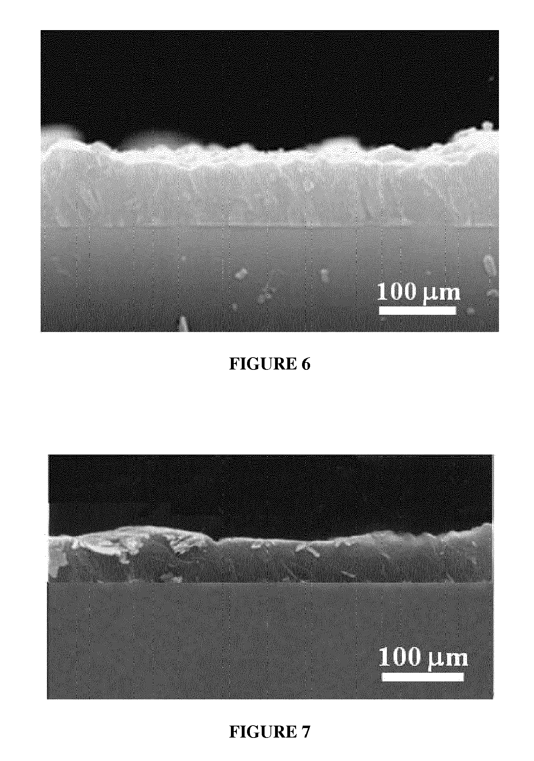

- La figure 6 représente une image de la section d'une feuille de cuivre de revêtue de MOF Zr-UiO-66 selon l'exemple 2a, au microscope électronique.
- La figure 7 représente une image de la section d'une feuille de cuivre revêtue de composite MOF Zr-UiO-66 selon l'exemple 2b, au microscope électronique.

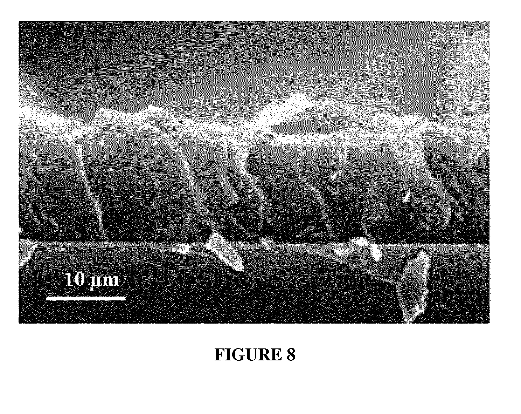

- La figure 8 représente une image de la section d'une feuille d'aluminium revêtue de MOF Zr-fumarate selon l'exemple 2e, au microscope électronique.
- Le tableau 1 répertorie une comparaison des quantités d'eau adsorbées (en % de la masse d'adsorbant anhydre) de différents adsorbants par rapport au gel de silice Fuji.
- Le tableau 2 répertorie les résultats comparatifs de l'exemple 1.

## EXEMPLES

Certains solides MOF qui sont des polymères de coordinations poreux montrent des capacités d'adsorption-désorption intéressantes pour certaines conditions d'adsorptions et de désorptions, notamment à faible pression de vapeur d'eau. Ces performances proviennent du profil d'isotherme particulier dit en « S » (type V par la nomenclature IUPAC). Des isothermes d'adsorption de MOFs avantageusement utilisés dans le cadre de la présente invention ont été rapportés dans la littérature :

- Isothermes d'adsorption d'eau du MOF Zr-UiO-66: **[3]**
- Isotherme d'adsorption d'eau du MOF Zr-UiO-66-NH2 : **[4]**
- Isotherme d'adsorption d'eau du MOF Zr-UiO-66-NH2 : **[5]**
- Isothermes d'adsorption d'eau du MOF Zr-UiO-fumarate (MOF-801) : **[6].**
- Isotherme d'adsorption d'eau du MOF Zr-UiO-MTB (MOF-841) : **[6]**
- Isotherme d'adsorption d'eau du MOF Al-CAU-10: **[6]**. Isotherme d'adsorption d'eau du MOF Basolite A520 **[2]**

En résumé, les MOF mentionnés sont caractérisés par

- De grandes capacité d'adsorptions d'eau à faible pression relatives de vapeurs d'eau (H.R <40%)
- Un profil d'adsorption en « S » plus ou moins marqué qui leurs confèrent une forte capacité en cyclage dans une fenêtre étroite de pression.

Cependant, le caractère d'adsorption en « S » implique d'un adsorbent qu'il ne soit performant que dans une gamme étroite de pression partielle. Ainsi, le Zr-téréphtalate (UiO66) ne permet que de cycler une quantité d'eau inférieure à 5% entre une H.R comprise entre 10 et 30% alors que la silice Fuji peut cycler une quantité d'eau supérieure à 10%. Reference pour UiO-66 = D. Wiersum, . Asian J. 2011, 6, 3270 - 3280).

## Exemple 1 - Performances comparatives

La performance de plusieurs adsorbants a été comparée dans différents modes de fonctionnement. Ces résultats comparatifs sont répertoriés dans le Tableau 1.

Tableau 1 :

| P/P$_{sat}$ | Silice de Fuji | CAU-10 | Al-fumara te | Cr-MIL-101-NH2 | Ti-MIL | UiO-66HT | UiO-66NH$_2$ | SAPO-34 | MCM 41 | MOF 801 | MOF 841 |
|---|---|---|---|---|---|---|---|---|---|---|---|
| 0.1 | 6.6 | ++ | = | = | - | - | = | +++ | - | +++ | - |
| 0,15 | 9 | +++ | - | = | - | - | - | +++ | - | +++ | - |
| 0,2 | 12 | ++ | - | - | - | - | = | ++ | - | ++ | - |
| 025 | 14 | ++ | = | - | + | - | ++ | ++ | - | ++ | +++ |

Dans cette étude, 4 modes de fonctionnement P/P$_{sat}$ ont été considérés où P/P$_{sat}$ (ou l'humidité relative, H.R. ou R.H. en anglais) est le rapport entre la pression dans l'évaporateur (ou le condenseur) et P$_{sat}$ est la pression de vapeur saturante correspondant à la température d'adsorption -que l'on supposera égale à la température de condensation- (ou de désorption). La température du rejet thermique dépend du type de refroidissement : à eau (auquel cas 25°C est éventuellement possible) ou à air et dans ce dernier cas, la température dépend de la qualité du refroidissement (tour de refroissement ou simple aéro réfrigérant).

Dans le tableau 1 est présentée une comparaison, pour les 5 conditions P/P$_{sat}$ étudiées, par rapport au gel de silice Fuji (Fuji Davison RD silica gel) des quantités d'eau adsorbées par les différents adsorbants dont les propriétés ont été fournies. Lorsque la quantité adsorbée par l'adsorbant est proche de celle du gel de silice Fuji, le signe = est utilisé, lorsqu'elle est moins bonne, le signe moins (-) est alors retenu et lorsqu'elle est un peu meilleure le signe + est utilisé et si elle est environ le double, ++ est utilisé et environ 3 fois meilleur, on utilise le symbole +++.

Les absorbants mentionnés dans le Tableau 1 et la figure 5 sont connus : ils sont soit disponibles commercialement, ou bien leur synthèse et caractérisation ont été publiées :

Gel de silice : Fuji Davison RD silica gel

Al-CAU-10 : Reinsch et al, Chem. Mater. 2013, 25, 17-26 **[10]**

MCM-41 : reference 643645 Aldrich Silica, mesostructured

Cr-MIL-101-NH2 : Modrow et al, Dalton Trans., 2012,41, 8690-8696 **[12]**

Ti-MIL-125 : Dan-Hardi, et al J. Am. Chem. Soc. 2009, 131, 10857. **[13]**

SAPO-34 : La synthèse est décrite sur le site de l'IZA (International Zeolite Association) avec les références appropriées. http://www.iza-online.org/synthesis/Recipes/SAPO-34.html

Zr-UiO-66-NH2 : La synthèse est décrite dans Kandiah et al J. Mater. Chem., 2010,20, 9848-9851 **[9]**

Zéolithe 13X : 283592 Sigma-Aldrich, Molecular sieves, 13X

L'analyse de ces résultats comparatifs a permis de sélectionner les trinômes (humidité relative)/(Te/Tc)/MOF les plus adaptés pour un fonctionnement optimale dans diverses applications de mise en oeuvre de machines à froid à adsorbant. Les fruits de cette analyse sont répertoriés dans le Tableau 2 (Te=température évaporateur, Tc=température condensateur).

Tableau 2 :

| Type de système | Mode de réalisation | Humidité relative (P/Psat) | $T_e/T_c$ | | Applications ou source de chaleur exploitées | MOF |
|---|---|---|---|---|---|---|
| Fermé | | | Ventilo-convecteurs | Planchers rafraîchissants | | |
| | 1 | 0,1 | 5/45°C | 12/50°C | -Chaudière à gaz naturel<br>- Refrigérateur solaire | Zr-fumarate (MOF 801)<br>Al-CAU-10 |
| | 2 | 0,15 | 5/35°C | 12/45°V | | Al-CAU-10 |
| | 3a | 0,20 | 5/30°C | 12/40°C | Système de climatisation dans véhicules automobiles | Zr-UiO-66-NH2 |
| | 3b | 0,25 | 5/25°C | 12/35°C | Système de climatisation de data centers (exploitation des chaleurs fatales pour la régénération du MOF adsorbant (mode désorption)) | Zr-UiO-66-NH2<br>Zr-UiO-MTB (MOF 841)<br>Basolite A520 |
| Ouvert | 4 | 0,5≥HR>0,25 | n.a | n.a | Déshumidification (p.ex. roue dessicante) | Al-MIL-100 Zr-fumarate (MOF 801) Zr-UiO-MTB (MOF 841) |

Les propriétés d'adsorption du MOF Zr-UiO-66-NH2 en font un bon candidat pour les applications en climatisation à plancher rafraîchissant (mode de fonctionnement n° 3a et 3b).

De plus, ses propriétés de désorption en fonction de la température démontrent que sa désorption est très efficace entre 60 et 70°C, ce qui en fait un excellent candidat en termes de quantité cyclée. Le résultat est que la quantité cyclée par l'UiO66-NH2 est 3 fois celle du gel de silice.

**Exemple 2 :Synthèse et caractérisation des revêtements (« coatings » en anglais) de MOF**

**Exemple 2a: Feuille Cu /UiO-66**

Une feuille de cuivre (50x50 mm) a été sablée sur les deux faces, traitée (« etched » and anglais) dans une solution d'hydroxyde de sodium (pH>12), désoxydée dans l'acide nitrique dilué (4<pH<6), et on la sèche à l'air à 60°C. On a agité une solution contenant 15,12 g (64,0 mmol) de ZrCl4, 10,8 g (65,2 mmol) d'acide benzène-1,4-dicarboxylique, 11,44 ml de HCl dans 200 ml de diméthylformamide (DMF) jusqu'à ce que la solution soit complètement transparente. La feuille de cuivre est ensuite immergée dans la solution dans un autoclave en acier inoxydable à paroi recouverte de Téflon (« Teflonlined » en anglais). Le mélange est chauffé à 120-160°C (de préférence) pendant 48 heures. Après refroidissement, la feuille de Cu a été soigneusement retirée, rincée trois fois dans du DMF et deux fois dans de l'EtOH et finalement séchée à l'air à 50 ° C.

**Exemple 2b: Composite UiO-66/polymère 1**

De la poudre UIO-66 a été synthétisée en ajoutant successivement 3,78 g de $ZrCl_4$ (16,2 mmol), 2,86 ml de HCl à 35% (32,4 mmol), et 2,70 g de 1,4-benzène dicarboxylique-acide (16,3 mmol) à 100 ml de N, N'-diméthylformamide. Le mélange a été agité jusqu'à ce que la solution soit complètement transparente, avant d'être transféré et scellé dans un autoclave en acier inoxydable à paroi recouverte de Téflon (« Teflonlined » en anglais) où le mélange a été chauffé à 220°C pendant 20 heures. La poudre microcristalline résultante a été séparée du solvant par centrifugation et séchée pendant une nuit dans un four réglé à 60°C. La poudre UIO-66 a été dispersée dans du DMF pour former une dispersion homogène et blanche (15 mg $ml^{-1}$) sous ultrasons pendant 2 h. Ensuite, 1270 $\mu l$ de dispersion de UIO-66 ont été ajoutés à un précurseur de poly (MAA-co-EDMA) contenant 35 $\mu l$ de monomère MAA (méthyl methacrylate), 400 $\mu l$ de réticulant EDMA et 400 mg de PEG 6000 porogène. Après que le mélange ci-dessus a été soumis aux ultrasons pendant 0,5 h, 10 mg d'initiateur AIBN a été ajouté, et un autre traitement de 5 min aux ultrasons a été nécessaire de dissoudre l'AIBN.

Une feuille métallique de cuivre (50x50mm) a été recouverte avec le mélange de polymérisation à l'aide d'une seringue. Après polymérisation à 60°C pendant 24 h, l'ensemble a été lavé avec du méthanol pour éliminer le porogène et le monomère n'ayant pas réagi.

**Exemple 2c : Composite UiO-66/polymère 2**

Les échantillons bruts de UIO-66 ont été synthétisés en ajoutant successivement 3,78 g de $ZrCl_4$ (16,2 mmol), 2,86 ml de HCl à 35% (32,4 mmol) et 2,70 g d'acide benzène-1,4-dicarboxylique (16,3 mmol) à 100 ml de N, N'-diméthylformamide. Le mélange a été agité jusqu'à ce que la solution soit complètement transparente, avant d'être transféré et scellé dans un autoclave en acier inoxydable à paroi recouverte de Téflon (« Teflonlined » en anglais) où le mélange a été chauffé à 220°C pendant 20 heures. La poudre microcristalline résultante a été séparée du solvant par centrifugation et séchée pendant une nuit dans un four réglé à 60°C.

Le revêtement a été préparé par un procédé de coulage en bande. On a dissout 0,3 g de 6FDA-ODA dans 10 ml de chloroforme et la solution a été filtrée pour éliminer les matières non dissoutes et les particules de poussière. L'évaporation du solvant a été mis en oeuvre pour obtenir une solution de polymère de 10 à 12% en poids. La poudre de UIO-66 a été ajoutée à 5 ml de chloroforme et soumise à une sonication pendant 1-2 minutes. Environ 10% de la solution de polymère a ensuite été ajoutée à la suspension de MOF UIO-66. La suspension a été agitée pendant 6 h. Après une bonne homogénéisation, la quantité restante de la solution de polymère a été ajoutée à la suspension et la suspension finale a été agité à nouveau pendant 1 jour. La suspension a été ensuite transférée dans un four sous vide pendant 30 min. pour dégazer, puis coulée sur une plaque de cuive et recouverte pour retarder l'évaporation du solvant. Après 48 h, le couvercle a été retiré pour faire évaporer le chloroforme résiduel pendant 24 h. Les couches supportées ont été ensuite placées dans une étuve à vide à 230 ° C pour un recuit de 15 h, et les membranes obtenues sont finalement refroidies lentement jusqu'à la température ambiante dans le four et stockées dans des dessiccateurs.

**Exemple 2d: Feuille Cu /UiO-66-NH2**

Une feuille de cuivre (50x50 mm) a été lavée avec de l'éthanol pendant 30 minutes et ensuite cinq fois avec de l'eau sous ultrasons pour nettoyer la surface, et est ensuite placée dans une étuve à 100°C pour l'oxydation.

On a agité une solution contenant 15,12 g (64,0 mmol) de ZrCl4, 11,81 g (65,2 mmol) d'acide 2-amino-benzène-1,4-dicarboxylique, 11,44 ml de HCl dans 200 ml de diméthylformamide (DMF) jusqu'à ce que la solution soit entièrement transparente. La feuille de cuivre est immergée dans la solution dans un autoclave en acier inoxydable à paroi recouverte de Téflon (« Teflonlined » en anglais). Le mélange est chauffé à 120°C pendant 48 heures.

Après refroidissement, la feuille de Cu a été soigneusement retirée, rincée cinq fois dans le DMF et enfin séchée à l'air à 50 ° C.

### Exemple 2e: Feuille Al /Zr-fumarate

Une feuille d'aluminium (50x50 mm) a été traitée dans une solution d'hydroxyde de sodium (pH>12), désoxydée dans de l'acide nitrique dilué (4<pH<6), puis séchée à l'air à 60°C.

On a agité une solution contenant 4,82 g (20,7 mmol) de ZrCl4, 10,29 g (62 mmol) d'acide fumarique dans 200 ml de diméthylformamide (DMF) jusqu'à ce que la solution soit complètement transparente.

La feuille d'aluminium est immergée dans la solution dans un autoclave en acier inoxydable à paroi recouverte de Téflon (« Teflonlined » en anglais). Le mélange est chauffé à 120°C pendant 48 heures.

Après refroidissement, la feuille d'aluminium a été soigneusement retirée, rincée cinq fois dans du DMF et de l'EtOH et finalement séchée à l'air à 50 ° C.

## LISTE DE REFERENCES

1. J. Bauer et al. Int. J. Energy Res. 2009; 33:1233-1249
2. EP2230288
3. D. Wiersum, Asian J. 2011, 6, 3270-3280.
4. Schoenecker, Ind. Eng. Chem. Res., 2012, 51, 6513.
5. Cmarik, Langmuir, 2012, 28, 15606.
6. Furukawa, J. Am. Chem. Soc., 2014, 136, 4369-4381.
7. Cavka et al., J. Am. Chem. Soc., 2008, 130, 13850
8. Wiβmann et al., Microporous mesoporous mater., 2012, 152, 64
9. Kandiah et al J. Mater. Chem., 2010,20, 9848-9851
10. Reinsch et al, Chem. Mater. 2013, 25, 17-26
11. Volkringer,†Chem. Mater. 2009, 21, 5695-5697
12. Modrow et al, Dalton Trans., 2012,41, 8690-8696
13. Dan-Hardi, et al J. Am. Chem. Soc. 2009, 131, 10857
14. K. Byrapsa, et al. « Handbook of hydrothermal technology », Noyes Publications, Parkridge, New Jersey USA, William Andrew Publishing, LLC, Norwich NY USA, 2001
15. G. Tompsett, et al. ChemPhysChem. 2006, 7, 296
16. S.-E. Park, et al. Catal. Survey Asia 2004, 8, 91
17. C. S. Cundy, Collect. Czech. Chem. Commun. 1998, 63, 1699
18. S. H. Jhung, et al. Bull. Kor. Chem. Soc. 2005, 26, 880
19. EP2049549

## Revendications

**1.** Procédé ou système tritherme de refroidissement/chauffage à adsorption pour machine à froid comprenant :

    a. un fluide réfrigérant (F3) choisi parmi l'eau et les alcools ;

    b. un module de condensation (C3) dudit fluide réfrigérant (F3), en connexion thermique avec un circuit d'eau (CW3$_{Tmoyen}$) dont la température de l'eau en sortie du circuit est $T_{c3}$ ;

    c. un module d'évaporation (E3) dudit fluide réfrigérant (F3), en connexion thermique avec un circuit d'eau (CW3$_{Tbasse}$) dont la température de l'eau en sortie du circuit est $T_{e3}$ ;

    d. au moins un module d'adsorption/désorption (AD3) contenant un adsorbant solide (A3) constitué d'un matériau métallo-organique hybride poreux (MOF) choisi parmi les aminotéréphtalates de zirconium, tels que Zr-UiO-66-NH2, les méthanetétrabenzoates de zirconium, tels que Zr-UiO-MTB (MOF-814), et les fumarates d'aluminium, tels que Basolite A520, le module d'adsorption/désorption (AD3) étant alternativement en connexion fluide avec ledit module de condensation (C3) puis ledit module d'évaporation (E3), lequel matériau MOF peut adsorber ou désorber le fluide réfrigérant (F3) selon que le module d'adsorption/désorption (AD3) est en connexion fluide avec le module d'évaporation (E3) et de condensation (C3), respectivement, et selon la température $T_{MOF}$ à laquelle le matériau MOF est soumis ;

**caractérisé en ce que** le système est mis en oeuvre alternativement en mode adsorption/désorption selon les paramètres de fonctionnement suivants :

en mode adsorption :

- le module d'adsorption/désorption (AD3) est en connexion fluide avec le module d'évaporation (E3) ;
- le matériau MOF est soumis à une température $T_{MOF} = T_{c3}$ dans lequel $T_{c3}$ représente 25°C $\pm$ 4°C ou 30°C $\pm$ 4°C pour utilisation du système comme ventilo-convecteur, ou 35°C $\pm$ 4°C ou 40°C $\pm$ 4°C, pour utilisation du système comme surface rafraîchissante;
- $0{,}10 \leq p_e/p_{sat(e)} \leq 0{,}35$ ; de préférence $p_e/p_{sat(e)}$=0,20 ou 0,25 ; et
- $T_{e3}$ représente 5°C $\pm$ 2°C ou 12°C $\pm$ 3°C, pour utilisation du système comme ventilo-convecteur ou surface rafraîchissante, respectivement;

dans lequel :

$p_e/p_{sat(e)}$ représente la valeur d'humidité relative dans le module d'évaporation (E3) ;
$p_e$ représente la pression du fluide réfrigérant (F3) en phase gazeuse dans le module d'évaporation (E3) ;
$p_{sat(e)}$ représente la pression de vapeur saturante du fluide réfrigérant (F3) à la température d'adsorption de celui-ci par le matériau métallo-organique hybride poreux ;

en mode désorption :

- le module d'adsorption/désorption (AD3) est en connexion fluide avec le module de condensation (C3) ;
- le matériau MOF est soumis à une température $T_{MOF}$, telle que $T_{max} \geq T_{MOF} > T_{c3}$ ; dans lequel $T_{max}$ est compris entre 60-100°C ;
- $0{,}10 \leq p_c/p_{sat(c)} \leq 0{,}20$ ou $0{,}15 \leq p_c/p_{sat(c)} \leq 0{,}25$ ; et
- $T_{c3}$ représente 25°C $\pm$ 4°C, 30°C $\pm$ 4°C, 35°C $\pm$ 4°C ou 40°C $\pm$ 4°C, pour utilisation du système comme ventilo-convecteur ou surface rafraîchissante, respectivement ;

dans lequel :

$p_c/p_{sat(c)}$ représente la valeur de pression de vapeur partielle du fluide réfrigérant (ou valeur d'humidité relative lorsque le fluide réfrigérant est l'eau) dans le module de condensation (C3);
$p_c$ représente la pression du fluide réfrigérant (F3) en phase gazeuse dans le module de condensation (C3);
$p_{sat(c)}$ représente la pression de vapeur saturante du fluide réfrigérant (F3) à la température de désorption de celui-ci du matériau métallo-organique hybride poreux.

2. Procédé ou système selon la revendication 1, dans lequel l'adsorbant solide (A3) constitué d'un matériau métallo-organique hybride poreux (MOF) choisi parmi les aminotéréphtalates de zirconium, tels que Zr-UiO-66-NH2, et les paramètres de fonctionnement adsorption/désorption sont les suivants :

en mode adsorption :

- le matériau MOF est soumis à une température $T_{MOF} = T_{c3}$ dans lequel $T_{c3}$ représente 30°C $\pm$ 4°C ou 40°C $\pm$ 4°C, pour utilisation du système comme ventilo-convecteur ou surface rafraîchissante, respectivement ;
- $0{,}10 \leq p_e/p_{sat(e)} \leq 0{,}30$ ; de préférence $p_e/p_{sat(e)}$=0,20 ; et
- $T_{e3}$ représente 5°C $\pm$ 2°C ou 12°C $\pm$ 3°C, pour utilisation du système comme ventilo-convecteur ou surface rafraîchissante, respectivement ;

en mode désorption :

- le matériau MOF est soumis à une température $T_{MOF}$, telle que $T_{max} \geq T_{MOF} > T_{c3}$ ; dans lequel $T_{max}$ est

compris entre 60-100°C ;

- $0{,}10 \leq p_c/p_{sat(c)} \leq 0{,}20$ ; et

- $T_{c3}$ représente 30°C $\pm$ 4°C ou 40°C $\pm$ 4°C, pour utilisation du système comme ventilo-convecteur ou surface rafraîchissante, respectivement.

3. Procédé ou système selon la revendication 1, dans lequel l'adsorbant solide (A3) constitué d'un matériau métallo-organique hybride poreux (MOF) choisi parmi les aminotéréphthalates de zirconium, tels que Zr-UiO-66-NH2, les méthanetétrabenzoates de zirconium, tels que Zr-UiO-MTB (MOF-814), et les fumarates d'aluminium, tels que Basolite A520, et les paramètres de fonctionnement adsorption/désorption sont les suivants :

en mode adsorption :

- le matériau MOF est soumis à une température $T_{MOF} = T_{c3}$ dans lequel $T_{c3}$ représente 25°C $\pm$ 4°C ou 35°C $\pm$ 4°C, pour utilisation du système comme ventilo-convecteur ou surface rafraîchissante, respectivement ;

- $0{,}15 \leq p_e/p_{sat(e)} \leq 0{,}35$ ; de préférence $p_e/p_{sat(e)}=0{,}25$ ; et

- $T_{e3}$ représente 5°C $\pm$ 2°C ou 12°C $\pm$ 3°C, pour utilisation du système comme ventilo-convecteur ou surface rafraîchissante, respectivement ;

en mode désorption :

- le matériau MOF est soumis à une température $T_{MOF}$, telle que $T_{max} \geq T_{MOF} > T_{c3}$ ; dans lequel $T_{max}$ est compris entre 60-100°C ;

- $0{,}15 \leq p_c/p_{sat(c)} \leq 0{,}25$ ; et

- $T_{c3}$ représente 25°C $\pm$ 4°C ou 35°C $\pm$ 4°C, pour utilisation du système comme ventilo-convecteur ou surface rafraîchissante, respectivement.

4. Procédé ou système selon l'une quelconque des revendications 1 à 3, dans lequel le système contient deux modules d'adsorption/désorption (AD3) et (AD3'), chacun alternativement en connexion fluide avec les modules de condensation (C3) et d'évaporation (E3), de sorte que lorsque (AD3) est en connexion fluide avec le module de condensation (C3) alors (AD3') est en connexion fluide avec le module d'évaporation (E3), et inversement.

5. Procédé ou système selon la revendication 4, dans lequel les deux modules d'adsorption/désorption contiennent le même adsorbant solide.

6. Procédé ou système selon l'une quelconque des revendications 1 à 5, dans lequel lorsque le module d'adsorption/désorption (AD3) ou (AD3') est en mode désorption, la source de chaleur permettant le chauffage du matériau MOF à la température $T_{max} \geq T_{MOF} > T_{c3}$ est choisie parmi les panneaux solaires, les brûleurs atmosphériques tels que les chaudières à gaz naturel, la géothermie, les chaleurs fatales.

7. Procédé ou système selon l'une quelconque des revendications 1 à 6, dans lequel la connexion thermique entre le fluide réfrigérant (F3) et les circuits d'eau (CW3$_{Tmoyen}$) et (CW3$_{Tbasse}$) des modules de condensation et d'évaporation, respectivement, est assurée par un échangeur thermique (ET3).

8. Procédé ou système selon l'une quelconque des revendications 1 à 7, dans lequel $T_{e3}$ représente 5°C $\pm$ 2°C en mode adsorption, et $T_{c3}$ représente 252°C $\pm$ 4°C ou 30°C $\pm$ 4°C en mode désorption.

9. Procédé ou système selon l'une quelconque des revendications 1 à 7, dans lequel $T_{e3}$ représente 12°C $\pm$ 3°C en mode adsorption, et $T_{c3}$ représente 35°C $\pm$ 4°C ou 40°C $\pm$ 4°C en mode désorption.

10. Système de climatisation à ventilo-convecteur mettant en oeuvre un procédé ou comprenant un système selon la revendication 8.

11. Système de climatisation à plancher ou plafond rafraîchissant mettant en oeuvre un procédé ou comprenant un système selon la revendication 9.

12. Utilisation d'un procédé ou système selon l'une quelconque des revendications 1 à 9 pour le refroidissement ou le chauffage dans un système de climatisation à ventilo-convecteur, ou à plancher ou plafond rafraîchissant.

$$Q_c = Q_0 + Q_g$$

2,5 kW

$Q_g$

1,5 kW

Compression thermique

1 kWf

$$Q_0 = 0,65 \times Q_a$$

**FIGURE 1**

1$^{er}$ Module d'adsorption/désorption (**AD)**

Adsorbant MOF

Module de condensation (**C**)

Température de sortie $T_c$

Fluide réfrigérant (**F**)

Condensateur

Circuit d'eau (**CW$_{Tmoyen}$**)

2è Module d'adsorption/désorption (**AD'**)

Echangeur thermique A

Vapeur

Circuit d'eau chaude

Eau chaude à température Tmax≥T$_{MOF}$≥Tc

Eau froide

Module d'évaporation (**E**)

Echangeur thermique B

Eau refroidie

Vapeur

Evaporateur

Température de sortie $T_e$

Pompe à fluide réfrigérant

Circuit d'eau (**CW$_{Tbasse}$**)

**FIGURE 2**

FIGURE 3

FIGURE 4

FIGURE 5

**FIGURE 6**

**FIGURE 7**

**FIGURE 8**

**Europäisches Patentamt**
**European Patent Office**
**Office européen des brevets**

# RAPPORT DE RECHERCHE EUROPEENNE

Numéro de la demande

EP 15 18 5194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FELIX JEREMIAS ET AL: "Programming MOFs for water sorption: amino-functionalized MIL-125 and UiO-66 for heat transformation and heat storage applications", DALTON TRANSACTIONS: THE INTERNATIONAL JOURNAL FOR INORGANIC, ORGANOMETALLIC AND BIOINORGANIC CHEMISTRY, vol. 42, no. 45, 1 janvier 2013 (2013-01-01), pages 15967-15973, XP055239742, GB ISSN: 1477-9226, DOI: 10.1039/c3dt51471d * page 15967, colonne de gauche, ligne 1 - page 15968, colonne de droite, ligne 18; figures 1-3; tableau 1 * | 1-9,11, 12 | INV. C09K5/04 F25B17/08 |
| X | FELIX JEREMIAS ET AL: "Water and methanol adsorption on MOFs for cycling heat transformation processes", NEW JOURNAL OF CHEMISTRY, vol. 38, no. 5, 1 janvier 2014 (2014-01-01), page 1846, XP055239676, GB ISSN: 1144-0546, DOI: 10.1039/c3nj01556d * page 1847, colonne de gauche, ligne 14 - colonne de droite, ligne 20; figure 1 * * page 1848, colonne de droite, ligne 6 - page 1849, colonne de droite, ligne 15; figure 3 * | 1-12 | |

DOMAINES TECHNIQUES RECHERCHES (IPC)

C09K
F25B

-/--

Le présent rapport a été établi pour toutes les revendications

| Lieu de la recherche | Date d'achèvement de la recherche | Examinateur |
|---|---|---|
| La Haye | 12 janvier 2016 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 15 18 5194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FELIX JEREMIAS ET AL: "Advancement of sorption-based heat transformation by a metal coating of highly-stable, hydrophilic aluminium fumarate MOF", RSC ADVANCES: AN INTERNATIONAL JOURNAL TO FURTHER THE CHEMICAL SCIENCES, vol. 4, no. 46, 1 janvier 2014 (2014-01-01), page 24073, XP055239680, GB ISSN: 2046-2069, DOI: 10.1039/c4ra03794d * page 24073, colonne de gauche, ligne 1 - page 24074, colonne de droite, ligne 15; figure 1 * ----- | 1-12 | |
| A | WO 2014/028574 A2 (ARKEMA INC [US]; BATTELLE MEMORIAL INSTITUTE [US]) 20 février 2014 (2014-02-20) * page 1, ligne 3 - page 3, ligne 7 * * page 5, ligne 11 - page 7, ligne 6; figure 2 * ----- | 1-9 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 12 janvier 2016 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 18 5194

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-01-2016

| Document brevet cité au rapport de recherche | Date de publication | Membre(s) de la famille de brevet(s) | Date de publication |
|---|---|---|---|
| WO 2014028574    A2 | 20-02-2014 | CA      2881829 A1 | 20-02-2014 |
| | | CN   105026854 A | 04-11-2015 |
| | | EP      2885365 A2 | 24-06-2015 |
| | | JP  2015529258 A | 05-10-2015 |
| | | US  2015291870 A1 | 15-10-2015 |
| | | WO  2014028574 A2 | 20-02-2014 |

EPO FORM P0460

Pour tout renseignement concernant cette annexe : voir Journal Officiel de l'Office européen des brevets, No.12/82

# EP 2 998 377 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2230288 A
- EP 2049549 A
- EP 0846923 A

**Littérature non-brevet citée dans la description**

- **J. BAUER et al.** *Int. J. Energy Res.,* 2009, vol. 33, 1233-1249
- **K. BYRAPSA et al.** Handbook of hydrothermal technology. Noyes Publications, 2001
- **G. TOMPSETT et al.** *ChemPhysChem.,* 2006, vol. 7, 296
- **S.-E. PARK et al.** *Catal. Survey Asia,* 2004, vol. 8, 91
- **C. S. CUNDY.** *Collect. Czech. Chem. Commum.,* 1998, vol. 63, 1699
- **S. H. JHUNG et al.** *Bull. Kor. Chem. Soc.,* 2005, vol. 26, 880
- **CAVKA et al.** *J. Am. Chem. Soc.,* 2008, vol. 130, 13850
- **KANDIAH et al.** *J. Mater. Chem.,* 2010, vol. 20, 9848-9851
- **WIβMANN et al.** *Microporous mesoporous mater.,* 2012, vol. 152, 64
- **REINSCH et al.** *Chem. Mater,* 2013, vol. 25, 17-26
- **VOLKRINGER.** *†Chem. Mater.,* 2009, vol. 21, 5695-5697
- **D. WIERSUM.** *Asian J.,* 2011, vol. 6, 3270-3280
- **MODROW et al.** *Dalton Trans.,* 2012, vol. 41, 8690-8696
- **DAN-HARDI et al.** *J. Am. Chem. Soc.,* 2009, vol. 131, 10857
- **SCHOENECKER.** *Ind. Eng. Chem. Res.,* 2012, vol. 51, 6513
- **CMARIK.** *Langmuir,* 2012, vol. 28, 15606
- **FURUKAWA.** *J. Am. Chem. Soc.,* 2014, vol. 136, 4369-4381
- **WIβMANN et al.** *Microporous mesoporous mater,* 2012, vol. 152, 64